# EUROPEAN PATENT APPLICATION

(11) **EP 2 339 444 A1**
(43) Date of publication of application: **29.06.2011**
(21) Application number: 09813155.0
(22) Date of filing: 11.09.2009
(51) Int. Cl.: G06F 3/048, G01C 21/00, G06F 3/14, G08G 1/0969, G09B 29/00, G09B 29/10

(54) **INFORMATION PROCESSING DEVICE AND INFORMATION PROCESSING METHOD**

(30) Priority: 12.09.2008 JP 2008234446
(71) Applicant: Fujitsu Ten Limited, Kobe-shi, Hyogo 652-8510 (JP)
(72) Inventor: NAKAMURA, Fumitake, 652-8510 Japan (JP); KAMIKAWA, Noriyuki, 652-8510 Japan (JP); NAGAMOTO, Satoru, 652-8510 Japan (JP); OHTA, Takashi, 652-8510 Japan (JP); OKADA, Takaho, 652-8510 Japan (JP); NAKAGAWA, Takahiro, 652-8510 Japan (JP)
(74) Representative: Ward, James Norman
(86) International application number: PCT/JP2009/065959
(87) International publication number: WO 2010/030009

(57) **Abstract**

An information processing device capable of processing navigation information is provided. Image processing means generates a signal for displaying a basic screen including a predetermined display element, to which a predetermined function is assigned, on a display device and outputs the signal to the display device. Detection means detects a user's operation of the predetermined display element displayed on the display device. Image generation means generates a superimposed display image for providing the predetermined function assigned to the predetermined display element when the operation is detected by the detection means. When the superimposed display image is generated by the image generation means, the image processing means generates a signal for displaying a superimposed screen, in which the superimposed display image is superimposed on the basic screen, on the display device and outputs the signal to the display device. The superimposed display image generated by the image generation means includes a relation display image which allows the user to visually understand a relation between the predetermined display element and the superimposed display image. The relation display image is generated so as to be continuously displayed even when a displayed content of the superimposed display image is updated.

## Description

### Technical Field

The present invention relates to an information processing device and an information processing method.

### Background Art

PTL 1 describes an information display device in which a screen displayed on a display section includes a main screen, a menu screen, and a subscreen, and the menu screen is displayed as a pop-up on the main screen. PTL 2 describes an in-vehicle electronic apparatus which is capable of editing a shortcut button displayed on a menu screen superimposingly displayed in a navigation screen.

### Citation List

### Patent Literature

- [PTL 1]: JP-A-2004-75206
- [PTL 2]: JP-A-2008-33763

### Summary of Invention

### Technical Problem

When new information is displayed on a display device, pop-up display can be carried out such that, while the previous displayed content is maintained in a partial region of the display region of the display device, new information is displayed in a region excluding the partial region, obtaining a visual effect that a new screen appears in the display region of the display device. A control element for user's operation, such as a button icon, is arranged in a pop-up image displayed through pop-up display, making it possible to provide a new interface to the user.

According to the pop-up display, it is possible to provide new information to the user while partially maintaining the previous displayed content. However, if a user's operation is received in a newly displayed pop-up image and display in the pop-up image is sequentially updated in accordance with the user's operation, it may be difficult to understand the relation between the updated displayed content and the operation as the starting point where the pop-up image is displayed or continuity from the operation as the starting point to the updated displayed content. For example, in a car navigation device, when an operation is carried out which includes a plurality of steps of displaying a pop-up image for setting a destination on a display screen, designating conditions in the displayed pop-up image, searching for destination candidates on the basis of the designated conditions, and finally setting a destination from among the searched destination candidates, it may be difficult for the user to understand situations, such as which operation was first carried out to display the pop-up image, what kind of path was subsequently followed to reach the current displayed content, and which operation should be carried out next.

In consideration of the above-described problem, an object of the invention is to allow a user to easily understand the relation between a current operation and a starting point, and continuity from the starting point to the operation.

### Solution to Problem

In order to achieve the above-described object, according to the invention, a superimposed display image which is generated when a user's operation of a predetermined display element is detected includes a relation display image which allows the user to visually understand the relation between the predetermined display element and the superimposed display image. Even when the displayed content of the superimposed display image is updated, the relation display image is generated so as to be continuously displayed, allowing the user to easily understand the relation between a current operation and a starting point, and continuity from the starting point to the operation.

That is, the invention provides an information processing device capable of processing navigation information. The information processing device includes image processing means for generating a signal for displaying a basic screen including a predetermined display element, to which a predetermined function is assigned, on a display device and outputting the signal to the display device, detection means for detecting a user's operation of the predetermined display element displayed on the display device, and image generation means for generating a superimposed display image for providing the predetermined function assigned to the predetermined display element when the operation is detected by the detection means. When the superimposed display image is generated by the image generation means, the image processing means generates a signal for displaying a superimposed screen, in which the superimposed display image is superimposed on the basic screen, on the display device and outputs the signal to the display device. The superimposed display image generated by the image generation means includes a relation display image which allows the user to visually understand a relation between the predetermined display element and the superimposed display image. The relation display image is generated so as to be continuously displayed on the display device even when a displayed content of the superimposed display image is updated.

In the invention, a basic screen refers to a screen on which a superimposed display image is superimposingly displayed in front, that is, a screen which becomes a background when viewed from the superimposed display image, and is a desktop screen, a window screen, a navigation screen, an AV (Audio Visual) screen, or the like in a system, such as an in-vehicle device including a GUI (Graphical User Interface). However, the basic screen is not limited to the above-described example and may be a screen which can become the background of the superimposed display image.

The basic screen includes a predetermined display element to which a predetermined function is assigned. Here, the predetermined function is one of various functions which are provided by the information processing device. For example, when the information processing device is an in-vehicle navigation device or is mounted in an in-vehicle navigation device, a destination search/setting function which is activated from a navigation screen is exemplified. The predetermined function is activated when a user's operation of a predetermined display element for calling the function is received. To this end, it is preferable that the predetermined display element is an image which allows the user to intuitively understand the function which can be called. In many cases, the predetermined display element is expressed by a graphic or characters and is an image (icon) which functions as a button.

If the user operates a display element, a function assigned to the operated display element is activated, the operation is detected by the detection means, and a superimposed display image is generated by superimposed display image generation means. In the invention, the superimposed display image is an image which is superimposingly displayed in front of the basic screen so as to provide a predetermined function. In a system including a GUI, a pop-up image is an example of the superimposed display image. For example, in an in-vehicle navigation device, if a navigation screen (basic screen) is displayed and a user's touch operation of a destination button (predetermined display element) for calling a destination search/setting function (predetermined function) is detected, a pop-up image (superimposed display image) for operating the destination search/setting function is generated and superimposingly displayed in front of the navigation screen as a pop-up.

The superimposed display image includes a relation display image which represents the relation between the superimposed display image and the predetermined display element, and the relation display image is generated so as to be continuously displayed regardless of the update of the superimposed display image. The relation display image is an image which allows the user to visually understand the relation between the display element and the superimposed display image which is displayed when a user's operation of the display element is received. As the relation display image, for example, a balloon-like image may be used, or various images, such as a connector-like image connecting a superimposed display image to a display element, may be used.

According to the invention, a relation display image is used to display the relation between a display element and a superimposed display image which is superimposingly displayed when a user's operation of the display element is received. Thus, it is possible for the user to easily understand the relation between a current operation and a starting point, and continuity from the starting point to the operation.

In displaying the superimposed display image generated by the image generation means, the image processing means may generate a signal for displaying an animation, in which the superimposed display image appears with a position where the predetermined display element is displayed as a starting point, on the display device and may output the signal to the display device. In displaying a superimposed display image, a visual effect is added with a display element whose operation was carried out to cause display as a starting point, making it possible for the user to more intuitively understand the relation and continuity.

The superimposed display image may be an image in which scroll display of information is possible in the superimposed display image. The scroll display is possible in a superimposed display image, making it possible to transmit a lot of information to the user in the superimposed display image with a limited display range. Information is scroll-displayed in the superimposed display image, such that, even when the displayed content of the superimposed display image is updated, the relation display image is continuously displayed.

A user's operation may be received through an input device, such as a keyboard or a mouse connected to the information processing device, or a button provided as hardware, the display device may be a touch panel display, and the detection means may detect the user's touch operation on the touch panel display. With this configuration, the relation between a place that the user actually touched in order to carry out a touch operation and a superimposed display image is displayed, making it possible for the user to more intuitively understand the relation and continuity.

The invention may also be embodied as a method or a program which causes a computer to function as the above-described means. The invention may also be embodied as a computer or another device or machine-readable recording medium in which the program is recorded. The computer-readable recording medium refers to a recording medium in which information, such as data or a program, is accumulated by electrical, magnetic, optical, mechanical, or chemical reaction, and is readable from a computer or the like.

### Advantageous Effects of Invention

According to the invention, it becomes possible for the user to easily understand the relation between a current operation and a starting point, and continuity from the starting point to the operation.

### Brief Description of Drawings

[Fig. 1] Fig. 1 is an appearance diagram of a navigation device.
[Fig. 2] Fig. 2 is a configuration diagram of a navigation device.
[Fig. 3] Fig. 3 is a diagram showing an operation of a display.
[Fig. 4] Fig. 4 is a diagram showing an operation of a display.
[Fig. 5] Fig. 5 is a functional block diagram of a control section.
[Fig. 6] Fig. 6 is a screen transition diagram of a main screen of a navigation device.
[Fig. 7] Fig. 7 is a screen transition diagram of navigation.
[Fig. 8] Fig. 8 is a diagram showing a display mode of an AV screen.
[Fig. 9] Fig. 9 is a diagram of a multi screen.
[Fig. 10] Fig. 10 is a diagram of an entire navigation screen.
[Fig. 11] Fig. 11 is a diagram of an entire AV screen.
[Fig. 12] Fig. 12 is a diagram showing a way of hiding an AV region.
[Fig. 13] Fig. 13 is a diagram showing a way of hiding a navigation region.
[Fig. 14] Fig. 14 is a conceptual diagram showing screen transition of a main screen.
[Fig. 15] Fig. 15 is a flowchart showing a flow of screen display processing.
[Fig. 16] Fig. 16 is a diagram of a menu screen.
[Fig. 17] Fig. 17 is a diagram showing an animation at the time of transition from a multi screen to a menu screen.
[Fig. 18] Fig. 18 is a diagram showing a destination setting screen.
[Fig. 19] Fig. 19 is a diagram showing a state where a button display region for destination search of Fig. 18 is scrolled downward.
[Fig. 20] Fig. 20 is a diagram showing a peripheral facility search screen.
[Fig. 21] Fig. 21 is a diagram showing an intersection enlargement screen.
[Fig. 22] Fig. 22 is a diagram showing a Japanese syllabary search screen.
[Fig. 23] Fig. 23 is a diagram showing a Japanese syllabary search screen according to another embodiment.

### Description of Embodiments

Hereinafter, the best mode for carrying out the invention will be illustratively described. The following embodiment is just for illustration, and the invention is not limited thereto.

### <Configuration>

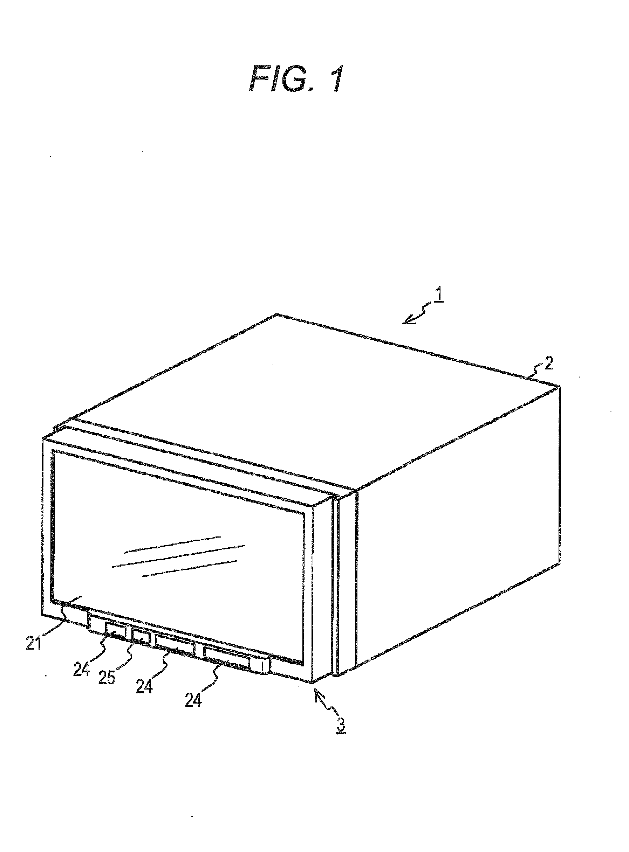

Fig. 1 is an appearance diagram of a navigation device 1 according to an embodiment of the invention. Examples of the navigation device include an in-vehicle navigation device, such as AVN (Registered Trademark: Audio Visual Navigation) manufactured by Fujitsu Ten Limited or the like. However, the invention may be applied to, for example, a portable navigation function-equipped electronic apparatus or the like. The invention may also be applied to an image process device which is externally connected to or embedded in a navigation device or a portable navigation function-equipped electronic apparatus to generate an image. The navigation device 1 of this embodiment is a car navigation device suitable for 2DIN (Deutsche Industrie Normen) having a main body and a monitor as a single body, and has a car navigation function of guiding a current position of a vehicle or a route to a destination or the like, a reproduction function of reproducing various audio/visual (hereinafter, referred to as AV) contents, a function of receiving broadcast waves, and the like. The navigation device 1 is used in a state of being installed around the center of the dashboard where a passenger at a driver's seat or a front passenger's seat easily reaches, and includes a main unit 2 and a display unit 3.

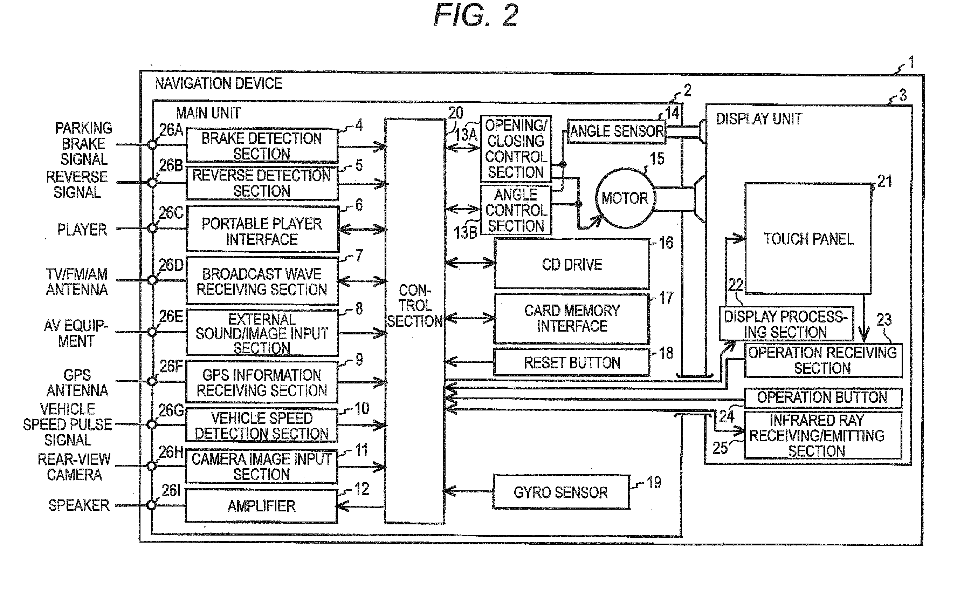

Fig. 2 is a configuration diagram of the navigation device 1. The main unit 2 includes electronic components, and is embedded with a brake detection section 4, a reverse detection section 5, a portable player interface 6, a broadcast wave receiving section 7, an external sound/image input section 8, a GPS information receiving section 9, a vehicle speed detection section 10, a camera image input section 11, an amplifier 12, an opening/closing control section 13A, an angle control section 13B, an angle sensor 14, a motor 15, a CD drive 16, a card memory interface 17, a reset button 18, a gyro sensor 19, and a control section 20. The display unit 3 mainly displays various kinds of information regarding the passengers of the vehicle in the form of an image, and includes devices which play a role of receiving a user's operation. The display unit 3 is embedded with a touch panel 21, a display processing section 22, an operation receiving section 23, an operation button 24, and an infrared ray receiving/emitting unit 25.

Hereinafter, the configuration of the main unit 2 will be described. The brake detection section 4 detects whether or not the parking brake of the vehicle is applied, and notifies the detection result to the control section 20. The brake detection section 4 detects the state of the brake from the conduction state of a switch which is switched on/off in interlocking with the motion of the parking brake lever (or pedal). The brake detection section 4 electrically detects the conduction state of the switch through a terminal 26A.

The reverse detection section 5 detects whether or not the gearshift of the vehicle is at the reverse position (backward movement) and notifies the detection result to the control section 20. The reverse detection section 5 detects the state of the gearshift from the on/off of a switch which moves in interlocking with the gearshift. The reverse detection section 5 electrically detects the conduction state of the switch through a terminal 26B.

The portable player interface 6 is an interface for bidirectional communication with a portable player (for example, iPOD (Registered Trademark) which reproduces music or the like. If a portable player is externally connected, the portable player interface 6 starts bidirectional communication to send an audio signal from the player to the control section 20 and to send a control signal, such as reproduction start or music selection, from the control section 20 to the player. The portable player interface 6 performs communication with the player through a cord connected to a terminal 26C.

The broadcast wave receiving section 7 is a circuit which includes a One Seg tuner (the application for trademark registration for "One Seg" is pending), an AM (Amplitude Modulation) tuner, and an FM (Frequency Modulation) tuner. The broadcast wave receiving section 7 controls the reception state of the tuner in accordance with the control signal from the control section 20 and sends signals of electric waves received by an antenna connected to a terminal 26D to the control section 20.

The external sound/image input section 8 is a circuit which receives a composite image signal or sound signal from a video/audio equipment connected to a terminal 26E and sends the composite image signal or sound signal to the control section 20.

The GPS (Global Positioning System) information receiving section 9 receives signals of electric waves from a GPS satellite received by a GPS antenna connected to a terminal 26F and sends the received signal to the control section 20. As well known in the art, the GPS is the system which measures the position of the vehicle on the basis of electric waves from at least three satellites from among many GPS satellites circulating the earth. The GPS information receiving section 9 processes the signals of electric waves of the GPS satellites circulating the earth. The signals from the GPS satellites received by the GPS information receiving section 9 are used in car navigation.

The vehicle speed detection section 10 is a circuit which detects a vehicle speed pulse signal generated in accordance with the rotation angle of the axle and sends the vehicle speed pulse signal to the control section 20. The vehicle speed pulse signal detected by the vehicle speed detection section 10 is a step-like vehicle speed pulse signal which is output from a vehicle speed sensor or an electronic control unit controlling the engine or brake of the vehicle, and is used in determining the vehicle speed from the number of pulses per unit time. If the number of pulses per unit time increases, the vehicle is accelerating, and if the number of pulses per unit time decreases, the vehicle is decelerating. The correlation between the speed of the vehicle and the vehicle speed pulses changes depending on the manufacturer who manufactures the vehicle, the vehicle type, the size of each wheel to be mounted, air pressure, or the like. For this reason, in the control section 20, the correlation between the speed of the vehicle and the vehicle speed pulses is appropriately updated from the correlation between the traveling distance of the vehicle calculated on the basis of the positioning result by the GPS and the number of pulses detected during traveling. The vehicle speed detection section 10 electrically detects the vehicle speed pulse signal output from the electronic control unit through a terminal 26G.

The camera image input section 11 is a circuit which receives an image signal from a rear-view camera which is a video camera photographing the rear side of the vehicle and sends the image signal to the control section 20. That is, when the reverse detection section 5 detects the reverse of the vehicle, the camera image input section 11 sends an image signal from the video camera connected to a terminal 26H to the control section 20.

The amplifier 12 is a circuit which amplifies a sound signal sent from the control section 20 to a speaker connected to a terminal 26I in the vehicle interior. The amplifier 12 can arbitrarily change the amplification factor in accordance with the control signal from the control section 20.

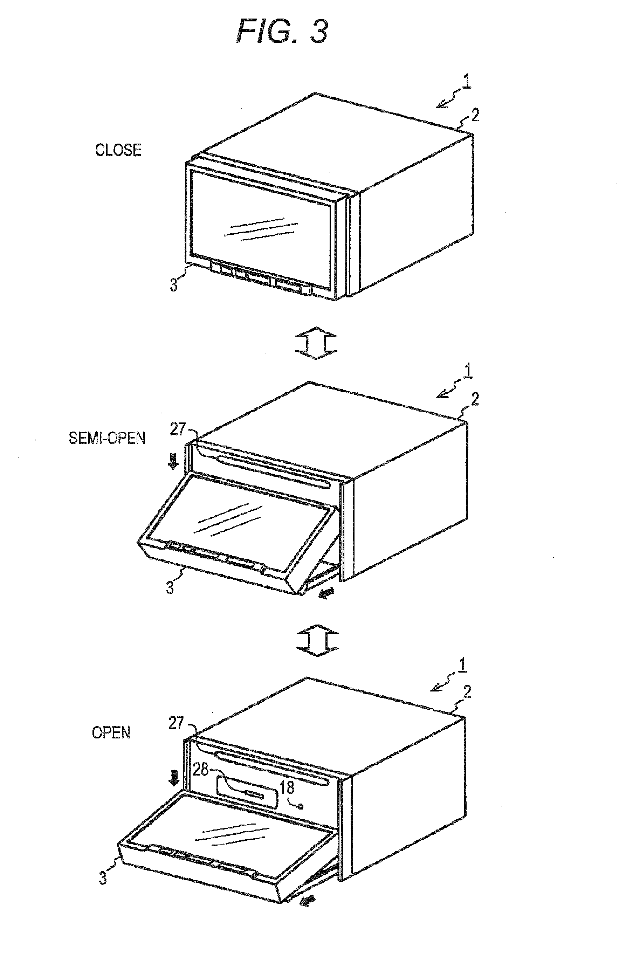

The opening/closing control section 13A is a circuit which carries out an opening/closing operation of the display unit 3. The opening/closing control section 13A controls the motor 15 in accordance with the control signal from the control section 20 or processes the signal from the angle sensor 14 to open/close the display unit 3. Fig. 3 shows the opening/closing operation of the display unit 3 which is realized when the opening/closing control section 13A controls the motor 15 when receiving the control signal from the control section 20. As shown in Fig. 3, the opening/closing control section 13A can adjust the pose of the display unit 3 in three stages and realizes a "close state" where a CD insertion slot 27 of the CD (Compact Disc) drive 16 is closed, a "semi-open" state where the CD insertion slot 27 of the CD drive 16 is open, and a "full open" state where a card insertion slot 28 of the card memory interface 17 or the reset button 18 is open. When the pose of the display unit 3 is in the "close" state, the CD insertion slot 27 or the card insertion slot 28 and the reset button 18 are hidden by the display unit 3. When the pose of the display unit 3 is in the "semi-open" state, the card insertion slot 28 or the reset button 18 is hidden by the display unit 3, and access can be made to the CD insertion slot 27 from the front side of the navigation device 1. When the pose of the display unit 3 is in the "full open" state, access can be made to the CD insertion slot 27, the card insertion slot 28, and the reset button 18 from the front side of the navigation device 1.

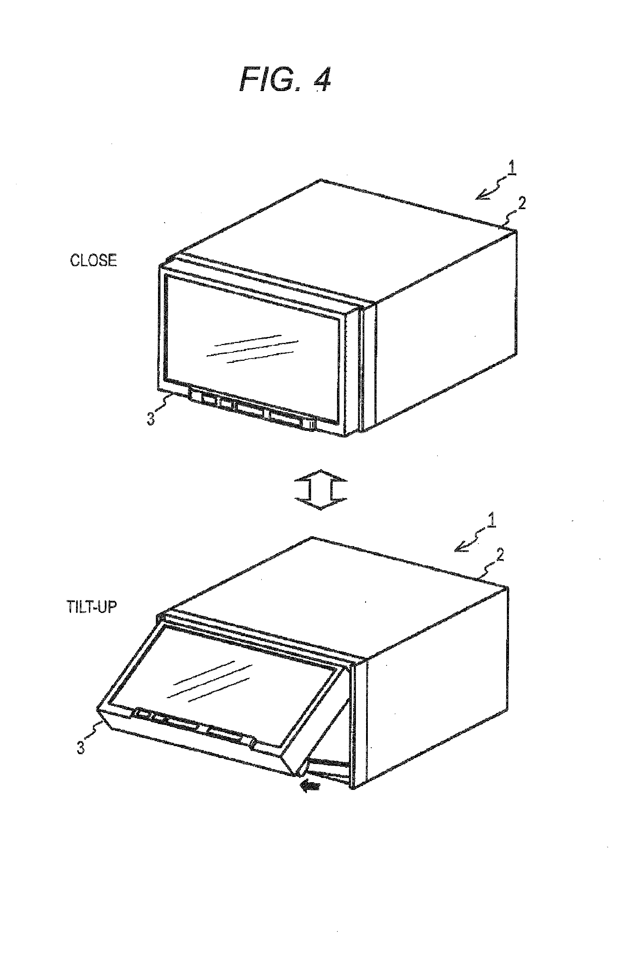

The angle control section 13B is a circuit which adjusts the angle of the display unit 3. Similarly to the opening/closing control section 13A, the angle control section 13B controls the motor 15 in accordance with the control signal from the control section 20 or processes the signal from the angle sensor 14 to adjust the angle of the display unit 3. The angle of the display unit 3 refers to the relative angle the front side of the main unit 2 and the front side of the display unit 3 (that is, the front side of the touch panel 21) centering on the axis extending in the left-right direction of the navigation device 1. Fig. 4 shows the angle adjustment state of the display unit 3 which is realized by the angle control section 13B. As shown in Fig. 4, the angle control section 13B adjusts the elevation angle of the display unit 3 in multiple stages to tilt up the display unit 3.

The angle sensor 14 is a sensor which detects the angle of the display unit 3, and notifies the detected angle as an electrical signal to the opening/closing control section 13A and the angle control section 13B. The motor 15 is a motor which adjusts the angle of the display unit 3, and moves up or down the upper end of the display unit 3 or moves the lower end of the display unit 3 forward and backward. If receiving the control signal from the control section 20, the opening/closing control section 13A and the angle control section 13B determines the difference between the angle of the display unit 3 detected by the angle sensor 14 and the target value of the angle determined on the basis of the control signal, and performs feedback control of the motor 15 such that the angle of the display unit 3 detected by the angle sensor 14 coincides with the target value.

The CD drive 16 is an optical disk reading device which reads a CD having recorded therein audio contents, such as music, and reproduces audio contents, and includes an optical pickup lens or light-emitting element, a disk driving motor, and the like.

The card memory interface 17 is a memory card reader/writer which reads and writes a nonvolatile semiconductor memory card with no storage holding operation. A memory card inserted into the card memory interface 17 has storage capacity of about 4 GB, and has recorded therein road information, such as highways or roads, map data including spot information (hereinafter, also referred to as POI (Point Of Interest) data) regarding various facilities, such as theme parks and gas stations, and data, such as telephone numbers or facilities names. The control section 20 accesses map data recorded in the memory card to realize all functions, route search of car navigation.

The gyro sensor 19 is a biaxial gyro sensor which is embedded in the main unit 2. The gyro sensor 19 enables vehicle positioning even when the GPS information receiving section 9 cannot receive the electric waves from the GPS satellites. When it is impossible to receive the electric waves from the GPS satellites, the control section 20 calculates the position of the vehicle is calculated on the basis of the vehicle speed detected by the vehicle speed detection section 10 and the traveling direction of the vehicle detected by the gyro sensor 19.

The control section 20 includes a CPU (Central Processing Unit), a ROM (Read Only Memory), a RAM (Random Access Memory), an input/output interface, and the like. If the accessory power supply of the vehicle is turned on, the control section 20 executes a computer program recorded in the ROM to realize various functions by using data of the memory card inserted into the card memory interface 17, data stored in the RAM, or the like. The details of various functions which are realized by the control section 20 will be described below.

Next, the constituent elements constituting the display unit 3 will be described. The touch panel 21 is a GUI (Graphical User Interface) in which a color liquid crystal display and a touch sensor are combined. In the touch panel 21, the screen is displayed with a 7.0-inch EGA (Enhanced Graphics Adapter) liquid crystal display, and if an icon or the like displayed on the screen is depressed, the touch sensor detects the depressing.

The display processing section 22 is a circuit which draws a screen to be displayed on the liquid crystal display of the touch panel 21. The display processing section 22 drives thin-film transistors arranged in the liquid crystal display in a lattice at uniform intervals on the basis of an image signal sent from the control section 20, and draws the screen of the touch panel 21.

If the touch sensor detects a touch operation on the touch panel 21, the operation receiving section 23 specifies the touched position on the screen and sends information of the specified position to the control section 20.

The operation button 24 is a mechanical button instead of a button (button image) which is displayed on the touch panel 21 in the form of an icon, and as shown in Fig. 1 or the like, an operation push-button switch which is arranged below the touch panel 21. The operation button 24 is constituted by an opening/closing button, a current location button, and a volume control button in order from the left side of the display unit 3. The volume control button is set such that, if the right side is pushed, the volume is turned up and, if the left side is pushed, the volume is turned down. If each button is depressed, a signal corresponding to the depressed button is sent to the control section 20.

The infrared ray receiving/emitting unit 25 is an interface for bidirectional communication between the navigation device 1 and a mobile phone using infrared rays, and is constituted by a light-emitting element which electrically emits infrared rays and a light-receiving element which converts the received infrared rays to electricity. The infrared ray receiving/emitting unit 25 sends the control signal or data from the control section 20 to the mobile phone and also sends the control signal or data from the mobile phone to the control section 20. As shown in Fig. 1, the infrared ray receiving/emitting unit 25 is arranged below the touch panel 21.

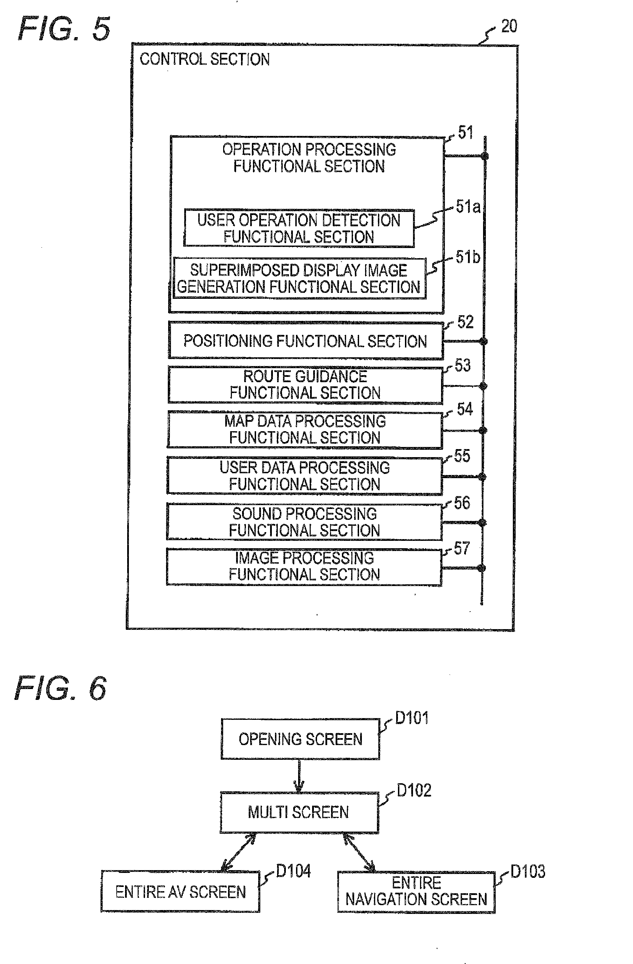

Next, various functions which are realized by the control section of the main unit 2 will be described in detail. Fig. 5 is a functional block diagram showing various functional sections which are realized by the control section 20. If the accessory power supply of the vehicle is powered on, as shown in Fig. 5, the control section 20 executes a computer program which realizes an operation processing functional section 51, a positioning functional section 52, a route guidance functional section 53, a map data processing functional section 54, a user data processing functional section 55, a sound processing functional section 56, and an image processing functional section 57.

The operation processing functional section 51 displays an operation screen for controlling the operations of various functional sections on the touch panel 21 through the image processing functional section 57, or processes an operation signal from the operation receiving section 23, the operation button 24, or the reset button 18 and controls the operations of various functional sections.

The operation processing functional section 51 includes a user operation detection functional section 51a which detects a touch operation by a user to buttons included in a basic screen which becomes a background of a pop-up image such as a multi screen which includes a navigation region and an AV region, an entire navigation screen or an entire AV screen, and a superimposed display image generation functional section 51b which generates the pop-up screen to be superimposingly displayed on the basic screen when the touch operation by the user is detected.

If the accessory power supply of the vehicle is powered on, the positioning functional section 52 measures the position (latitude and longitude) of the vehicle on the basis of information of electric waves from the satellites sent from the GPS information receiving section 9, information of the vehicle speed notified from the vehicle speed detection section 10, and information of the angular speed sent from the gyro sensor 19.

The route guidance functional section 53 is a functional section which finds out the route from the current location of the vehicle to the destination set by the user and carries out route guidance. The route guidance functional section 53 finds out the traveling route from the position of the vehicle measured by the positioning functional section 52 to the destination from map data of the memory card inserted into the card memory interface 17. The route of the vehicle is guided by sound and images from the relationship between the found traveling route and the position of the vehicle.

The map data processing functional section 54 generates graphic data of the map displayed on the touch panel 21 on the basis of map data of the memory care inserted into the card memory interface 17 or data of the traveling route found by the route guidance functional section 53, data of VICS (Registered Trademark) road traffic information acquired from FM broadcast waves through the broadcast wave receiving section 7, positional data of the vehicle measured by the positioning functional section 52, and the like.

The user data processing functional section 55 writes spot information (for example, positional information of the home) to be registered by the user or history information of route search and setting information, such as display/non-display of icons, into the RAM or reads the information from the RAM.

The sound processing functional section 56 is a functional section which processes the signal of sound output from the speaker through the amplifier 12. That is, the sound processing functional section 56 sends an audio broadcast received by the broadcast wave receiving section 7, an audio signal acquired from the player by the portable player interface 6, or an audio signal to be reproduced by the CD drive 16 to the amplifier 12, or superimposes a sound signal of route guidance from the route guidance functional section 53 on the audio signal and sends the resultant signal to the amplifier 12.

The image processing functional section 57 is a functional section which generates image data to be displayed on the touch panel 21. That is, the image processing functional section 57 synthesizes data of an operation screen generated by the operation processing functional section 51 and data of the screen of a map for display generated by the map data processing functional section 54 and sends the resultant signal to the display processing section 22, sends image data of television broadcast received by the broadcast wave receiving section 7 to the display processing section 22, or sends an image signal from the camera image input section 11 to the display processing section 22 in interlocking with the detection of the backward movement of the vehicle by the reverse detection section 5. The image processing functional section 57 stops the notification of image data if the brake detection section 4 detects the release of the parking brake in sending image data of television broadcast to the display processing section 22.

### <Operation>

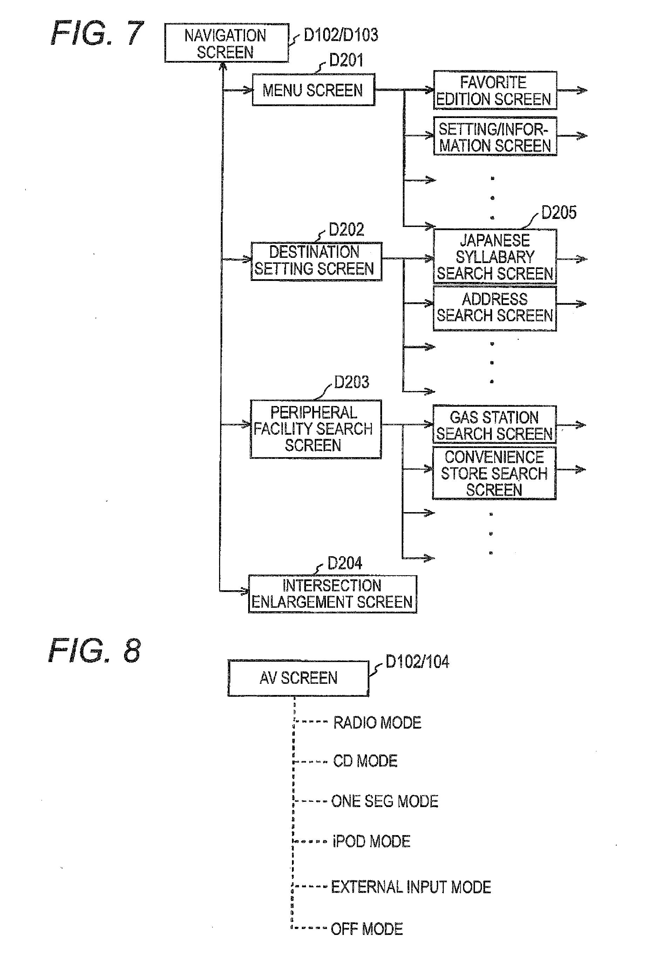

Hereinafter, the operation of the navigation device 1 will be described. Fig. 6 is a screen transition diagram of the main screen of the navigation device 1. Fig. 7 is a screen transition diagram regarding navigation. Fig. 8 is a diagram showing the display mode of the AV screen. Hereinafter, the operation of the navigation device 1 will be described with reference to Figs. 6 to 8.

(D101) An opening screen (D101) will be described. If the accessory power supply of the vehicle is powered on and power is supplied to the navigation device 1, the control section 20 executes the computer program stored in the ROM to initialize the navigation device 1 and to realize various functional sections shown in Fig. 5. The image processing functional section 57 references data of the opening screen stored in the ROM and causes the touch panel 21 to display the opening screen. While the opening screen is displayed, the following processing is performed in each functional section of the control section 20. That is, the operation processing functional section 51 scans a signal from the operation receiving section 23, the operation button 24, or the reset button 18 to receive a user's operation. The positioning functional section 52 processes positioning information acquired by the GPS information receiving section 9 or a signal from the vehicle speed detection section 10 or the gyro sensor 19, and measures the position of the vehicle. The map data processing functional section 54 accesses the card memory inserted into the card memory interface 17 and reads map data around the position of the host vehicle measured by the positioning functional section 52.

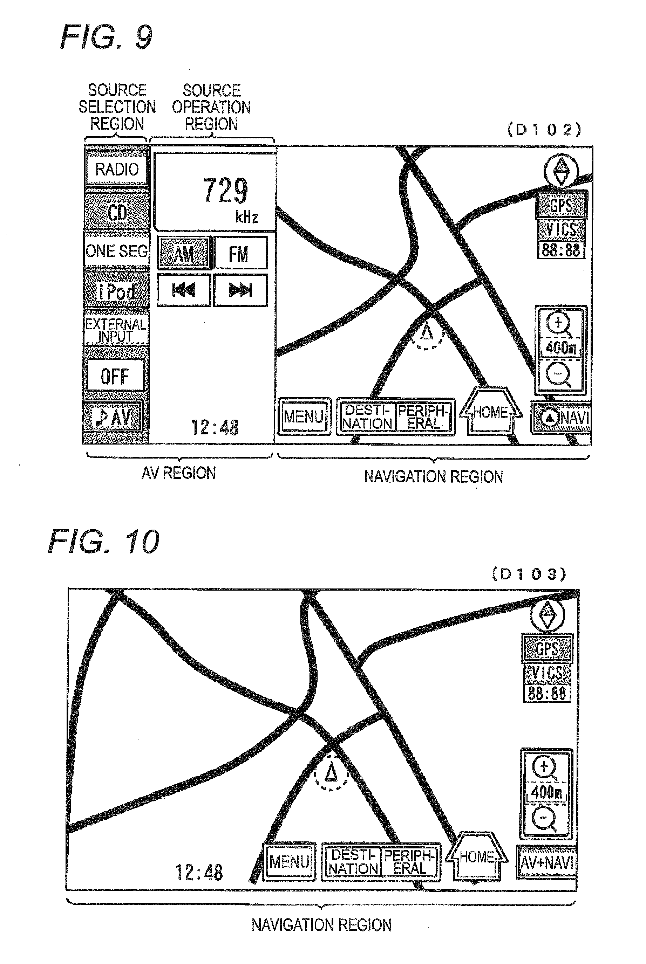

(D102) Next, a multi screen (D102) will be described. If four seconds has elapsed after the opening screen has been displayed, the image processing functional section 57 generates the multi screen (D 102), in which the operation screen for AV and the operation screen for navigation are combined, on the basis of image data of operation buttons stored in the ROM or map data read by the map data processing functional section 54, and displays the multi screen (D102) on the touch panel 21. Fig. 9 is a diagram of the multi screen. The image processing functional section 57, as shown in Fig. 9, displays a screen of the AV region in which operation buttons for AV are arranged, on a left side of the touch panel 21, and displays a screen of the navigation region in which a map for navigation and operation buttons are arranged, on a right side of the touch panel 21. The AV region is divided into a source selection region where operation buttons for selecting a source are collectively displayed and a source operation region where a button or information regarding a selected source is displayed.

As shown in Fig. 9, the image processing functional section 57 displays "radio", "CD", "One Seg", "iPod", "external input", "OFF", and "AV" buttons in the source selection region of the AV region. If any source button is touched, the source is selected. In the example of Fig. 9, "radio" is selected, received frequency and operation buttons or information regarding a selected source, such as an AM/FM switching button and a selection button, are displayed in the source operation region. Thus, at this time, the sound processing functional section 56 outputs audio signal of AM broadcast received by the broadcast wave receiving section 7 from the speaker through the amplifier 12. On the other hand, the image processing functional section 57 displays "menu", "destination", "peripheral", "home", "navigation", "map enlargement", and "map reduction" buttons in the navigation region, in addition to a map which is drawn on the basis of map data read by the map data processing functional section 54. In the multi screen (D102), there are two regions of the AV region and the navigation region, thus the AV region is narrower than in the entire AV screen (D104). Thus, the basics from among the operation buttons or information related to the source are displayed in the source operation region of the multi screen (D102).

In this state, if the operation processing functional section 51 detects that the "AV" button is depressed, the image processing functional section 57 carries out transition to the screen display state of the entire AV screen (D104). A case where other buttons are depressed will be described in detail after the description of the entire navigation screen (D103) and the entire AV screen (D104).

(D103) Next, the entire navigation screen (D103) will be described. If the operation processing functional section 51 detects that the "navigation" button displayed on the multi screen (D102) is depressed, the image processing functional section 57 gradually hides the AV region to display the navigation region in the entire screen. Fig. 10 is a diagram of the entire navigation screen. As shown in Fig. 10, the image processing functional section 57 hides the AV region and displays the navigation region over the entire screen of the touch panel 21.

As shown in Fig. 10, similarly to the multi screen (D102), the map or the operation buttons, such as "menu" and "destination", are displayed in the navigation region. The image processing functional section 57 displays the screen such that the icon of the position of the host vehicle which is displayed on the entire navigation screen is located at the center of the navigation region. For this reason, when the display screen of the touch panel 21 is transited from the multi screen (D102) to the entire navigation screen (D103), display of the icon of the position of the host vehicle or the map is slightly scrolled within the screen. Meanwhile, the image processing functional section 57 displays the screen such that the operations button, such as "menu" or "destination", is at the same position on the display screen of the touch panel 21. For this reason, even when the display screen of the touch panel 21 is transited from the multi screen (D102) to the entire navigation screen (D103), the operation buttons for navigation are not scrolled on the screen of the touch panel 21 and continue to be displayed at the same position. Only the display of the "navigation" button is switched to an "AV+navigation" button. If the "AV+navigation" button is depressed, the image processing functional section 57 switches display from the entire navigation screen (D103) to the multi screen (D102).

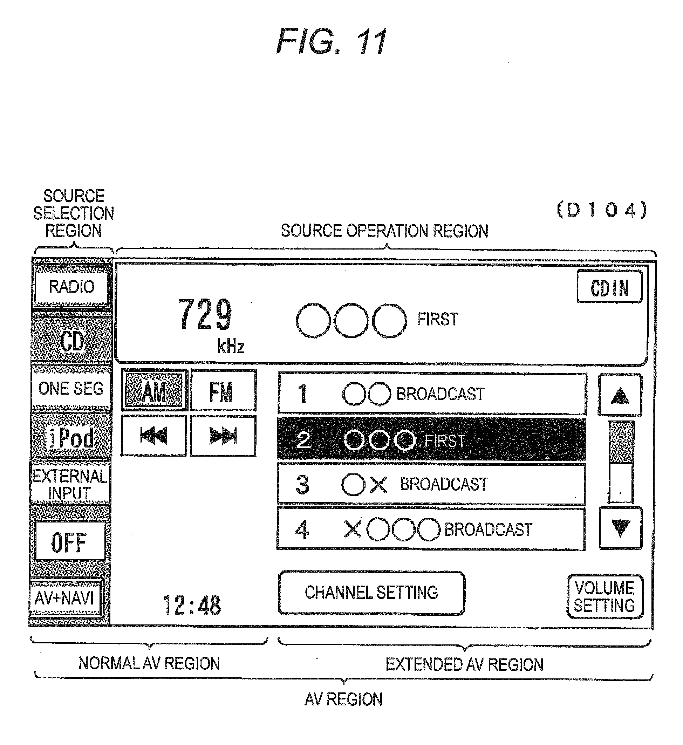

(D104) Next, the entire AV screen (D104) will be described. If the operation processing functional section 51 detects that the "AV" button displayed on the multi screen (D102) is depressed, the image processing functional section 57 gradually hides the navigation region to display the AV region in the entire screen. Fig. 11 is a diagram of the entire AV screen. As shown in Fig. 11, the image processing functional section 57 hides the navigation region and displays the AV region over the entire screen of the touch panel 21.

As shown in Fig. 11, similarly to the multi screen (D102), the "radio", "CD", "One Seg", "iPod", "external input", and "OFF" buttons are displayed in the source selection region of the AV region. In the AV region, the source operation region is enlarged, and a selection button of broadcast station name or preset, a channel setting button, and a volume setting button which have not been displayed on the multi screen (D102) are displayed. Displayed is also "CDIN" indicating that a CD is inserted into the CD drive 16. In the AV region, operation buttons for "radio" or the like which have been displayed on the multi screen (D102) are displayed at the same positions. Only the display of the "navigation" button is switched to the "AV+navigation" button. Hereinafter, a region which is displayed on both the multi screen and the entire AV screen is referred to as an "normal AV region", and a region which is displayed only the entire AV screen is referred to as an "extended AV region". If the "AV+navigation" button is depressed, the image processing functional section 57 switches display from the entire AV screen (D104) to the multi screen (D102). In the entire AV screen (D104), since there is no navigation region, the AV region is wider than in the multi screen (D102). Thus, in the source operation region of the entire AV screen (D 104), all operation buttons or information related to the source is displayed. As described above, the display region with the operation buttons or information of a source to be displayed only in the entire AV screen (D104) is the "extended AV region" and constitutes a part of the source operation region. The display region with the operation buttons or information of a source to be displayed in both the multi screen (D 102) and the entire AV screen (D104) is the "normal AV region" and constitutes a part of the source operation region and the source selection region.

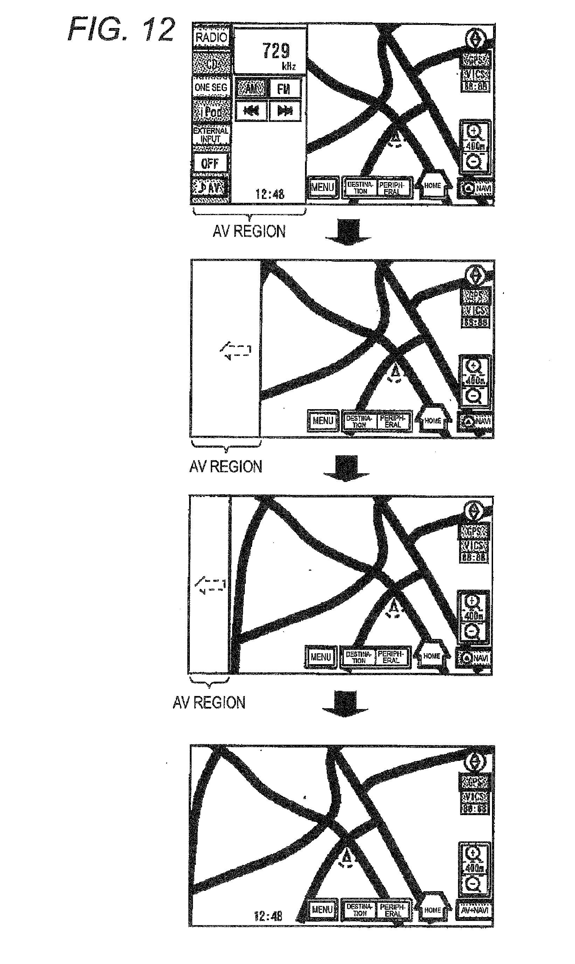

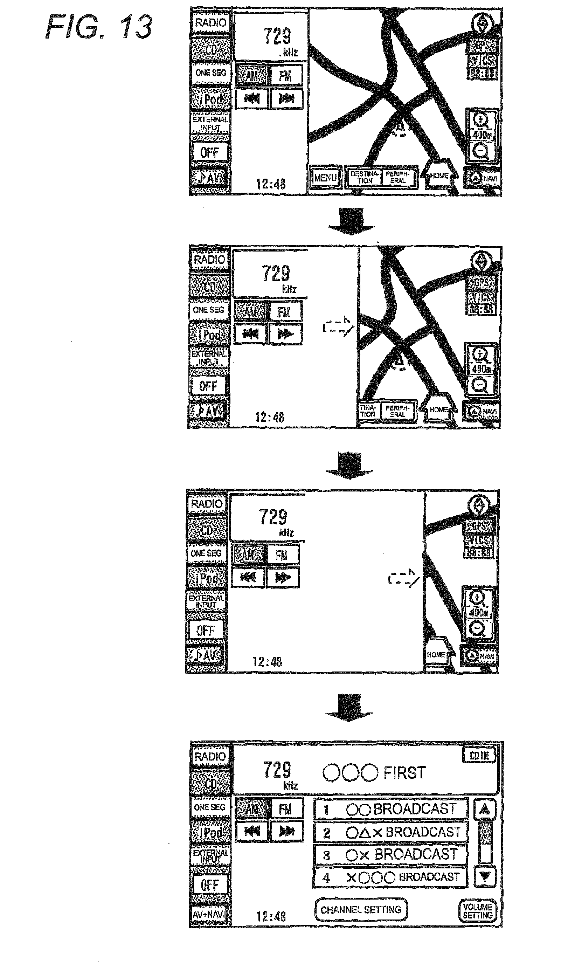

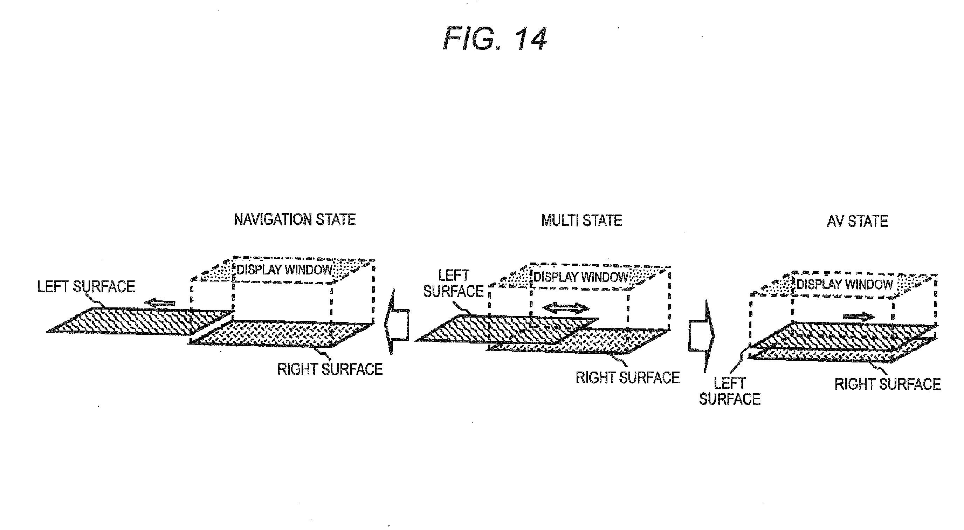

The screen transition (Fig. 6) of the main screen of the navigation device 1 is as described above. Hereinafter, detailed description will be provided as to a way of moving the navigation region and the AV region on the screen at the time of screen transition from the multi screen (D102) to the entire navigation screen (D103) or the entire AV screen (D104). Fig. 12 is a diagram showing a way of hiding the AV region at the time of transition from the multi screen (D102) to the entire navigation screen (D103). Fig. 13 is a diagram showing a way of hiding the navigation region at the time of transition from the multi screen (D103) to the entire AV screen (D104). The image processing functional section 57 displays the screen such that, in switching display from the multi screen to the entire navigation screen or the entire AV screen, it seems like the navigation region and the AV region is scrolled. That is, the image processing functional section 57 displays the screen such that, in switching display from the multi screen to the entire navigation screen, the AV region is gradually withdrawn to the left side, in other words, scroll is done so as to gradually decrease the display area of the AV region and scroll is also done so as to gradually increase the display area of the navigation region. On the other hand, the image processing functional section 57 displays the screen such that, in switching display from the multi screen to the entire AV screen, the AV region is gradually entered to the right side. Thus, the user can feel like the AV screen is inserted and retracted on the navigation screen. Therefore, when viewing the navigation screen, the user depresses the "navigation." button displayed on the right side of the multi screen (D102), thereby easily visually understanding transition to the entire navigation screen (D103). When viewing the AV screen, the user depresses the "AV" button displayed on the left side of the multi screen (D102), thereby easily visually understanding the AV screen being inserted and retracted. Fig. 14 is a conceptual diagram showing an aspect of screen transition of the main screen. As shown in Fig. 14, the user can operate the main screen of the navigation device 1 in the form of an image such that it seems like the left surface (corresponding to the AV screen in this embodiment) is inserted and retracted from the left side on the right surface (corresponding to the navigation screen in this embodiment) when viewed from the display window. Therefore, it is possible for the user to easily determine whether the main screen is in and carry out an operation without question.

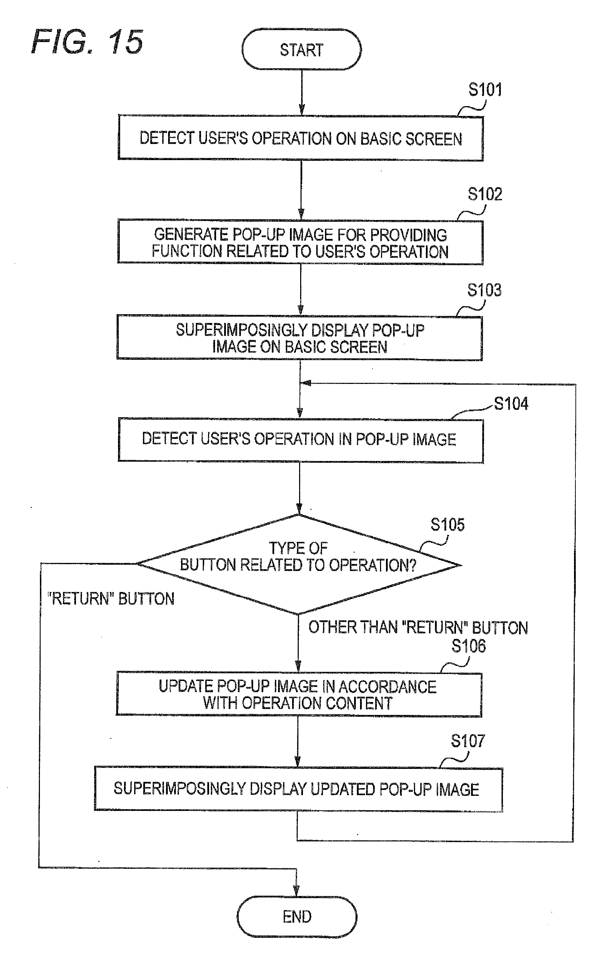

Next, description will be provided as to a flow of screen transition shown in Fig. 7, that is, a flow of screen display processing when various buttons displayed in a navigation region of a multi screen (D102) or an entire navigation screen (D103) (hereinafter, referred to as "basic screen") are operated, such that a menu screen (D201), a destination setting screen (D202), or a peripheral facility search screen (D203) including a pop-up image is displayed, and a function is provided by using the screen. Fig. 15 is a flowchart showing a flow of screen display processing in this embodiment when various buttons displayed on the basic screen are operated, such that a pop-up image is displayed and various functions are provided by using the displayed pop-up image. The processing of this flowchart starts in a state where the basic screen, such as the multi screen (D102) or the entire navigation screen (D103) generated by the image processing functional section 57, is output to the touch panel 21 and displayed.

In Steps S101 1 to S103, an operation of a display element, such as a button displayed on the basic screen, is detected, and a pop-up image (superimposed display image) is displayed. If the user operation detection functional section 51 a detects the operation of each button displayed in the navigation region of the basic screen displayed on the touch panel 21 (Step S101), the superimposed display image generation functional section 51b specifies a function according to a button whose operation is detected and generates a pop-up image for providing the function (Step S102). A software module which is executed for function provision and data of the generated pop-up image are recorded in a ROM in advance in association with identification information of buttons (display elements) displayed on the basic screen and are specified by using the identification information of a display element operated by the user. The image processing functional section 57 generates an image signal for displaying the generated pop-up image to be superimposed on the basic screen and outputs the image signal to the touch panel 21 (Step S103). Then, a screen in which the pop-up image is superimposingly displayed in front of the basic screen, such as the menu screen (D201), the destination setting screen (D202), or the peripheral facility search screen (D203), is displayed on the touch panel 21. The pop-up image refers to an image which, when a button displayed on the screen is depressed, is displayed in a standing state in front of the basis screen so as to provide a function associated with the button and is, for example, an image in which menu items are displayed.

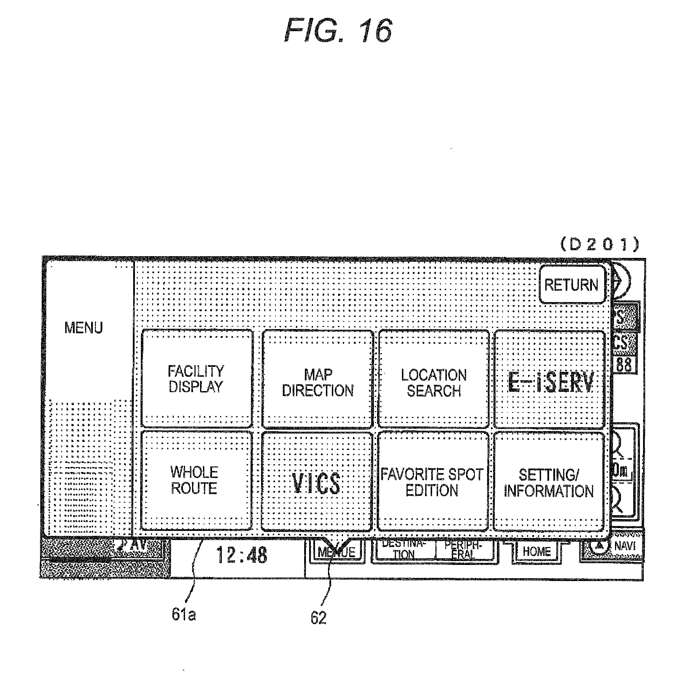

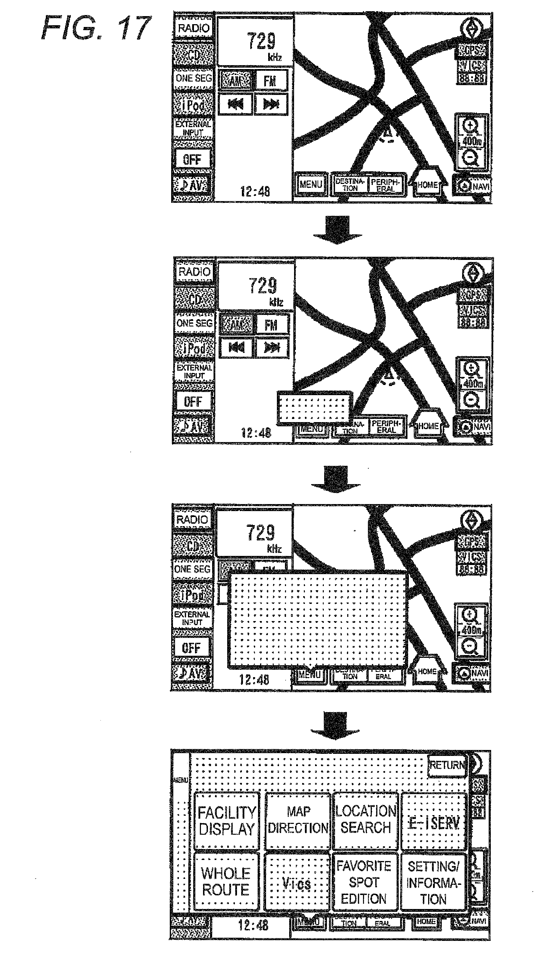

The menu screen (D201) is a screen which includes a pop-up image 61a for providing a menu selection function of carrying out the setting of the navigation device 1 or the like, and is displayed when the user operation detection functional section 51a detects that the "menu" button displayed in the navigation region of the multi screen (D 102) or the entire navigation screen (D 103) is depressed. Fig. 16 is a diagram of the menu screen (D20 1). As shown in Fig. 16, the image processing functional section 57 displays the pop-up image 61a including a balloon-like relation display image 62 which represents the relation between the "menu" button in the navigation region and the pop-up image 61 a for a menu selection function which is newly displayed in accordance with a user's operation. The image processing functional section 57 displays an animation which has a visual effect such that the pop-up image 61a is displayed while being gradually enlarged with the "menu" button as a starting point, thus the multi screen (D 102) becomes the background of the pop-up image 61 a and the periphery of the multi screen (D102) is viewed. Fig. 17 is a diagram showing an animation at the time of transition from the multi screen (D102) to the menu screen (D201). Thus, it is possible for the user to easily visually understand that the menu screen is transited from the multi screen and displayed and to carry out an operation without making a mistake. On the menu screen (D201) are displayed a button for user's setting, such as an icon or facility display, and a button for editing a favorite spot. Spot information or the like registered by the user is stored in the RAM of the control section 20 by the user data processing functional section 55.

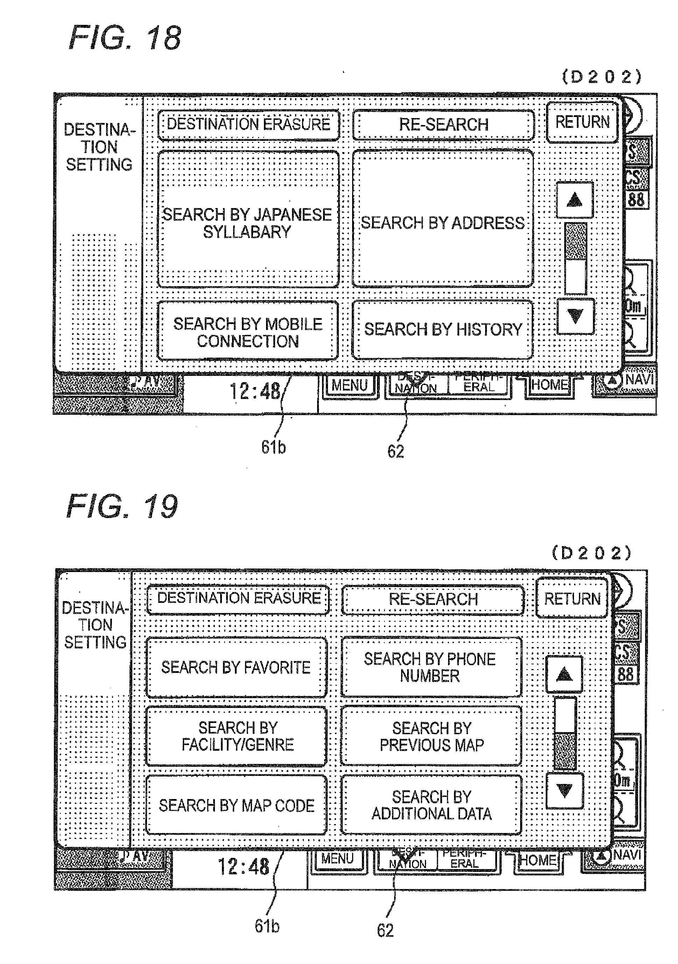

The destination setting screen (D202) is a screen which includes a pop-up image 61 b for providing a destination setting function, and is displayed when the user operation detection functional section 51a detects that the "destination" button displayed in the navigation region of the multi screen (D102) or the entire navigation screen (D103) is depressed. Fig. 18 is a diagram of the destination setting screen (D202). If the operation processing functional section 51 detects that the "destination" button is depressed, the image processing functional section 57 displays the destination setting screen (D202) on the touch panel 21. Similarly to the menu screen, the image processing functional section 57 displays the pop-up image 61b including the relation display image 62 with animation display having a visual effect such that the pop-up image 61b is displayed while being gradually enlarged with the "destination" button in the navigation region as a starting point.

The destination setting screen (D202) includes buttons for destination search, such as a "search by Japanese syllabary" button, a "search by address" button, a "search by mobile convection" button, a "search by history" button, a "search by favorite" button, a "search by telephone number" button, a "search by facility/genre" button, a "search by previous map" button, a "search by map code" button, and a "search by additional data" button. The buttons for destination search are displayed in the pop-up image 61b of the destination setting screen (D202) such that all buttons are listed by a scroll operation.

Fig. 19 is a diagram showing a state where a button display region for destination search in the pop-up image 61b of Fig. 18 is scrolled downward in this embodiment. A scroll bar and a scroll button are displayed on the destination setting screen (D202), such that scroll display by a user's touch operation is possible. If a touch operation of the scroll bar or the scroll button is detected by the operation processing functional section 51, the image processing functional section 57 scrolls the button display region for destination search in the pop-up image 61b downward. In this way, scroll display is possible in the pop-up image 61b, such that each button can be largely displayed so as to be easy to view in the display region of a limited size (in this embodiment, 7.0 inches) of the touch panel 21. A button which is frequently used is displayed more largely and at a higher position than other buttons. In this embodiment, the "search by Japanese syllabary" button and the "search by address" button are displayed largely and at the top position compared to other buttons for destination search.

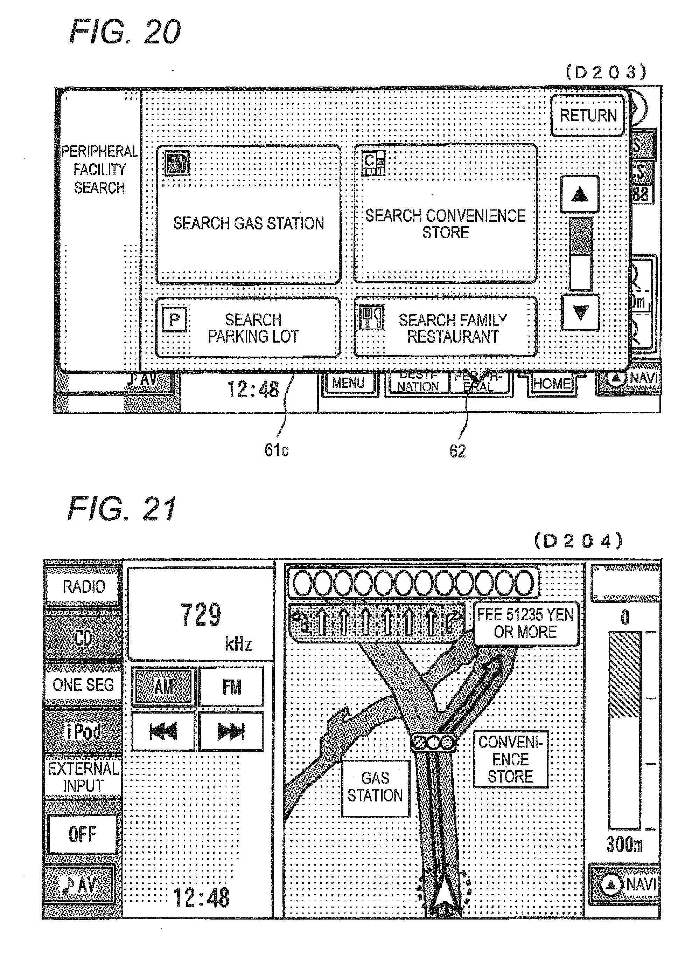

The peripheral facility search screen (D203) is a screen which includes a pop-up image 61c for providing a peripheral facility search function, and is displayed when the user operation detection functional section 51a detects that a "peripheral" button displayed in the navigation region of the multi screen (D102) or the entire navigation screen (D103) is depressed. Fig. 20 is a diagram of the peripheral facility search screen (D203). If the operation processing functional section 51 detects that the "peripheral" button is detected, the image processing functional section 57 displays the peripheral facility search screen (D203) on the touch panel 21. The image processing functional section 57 displays the pop-up image 61c including a relation display image 62 with animation display having a visual effect such that the pop-up image 61c is displayed while being gradually enlarged with the "peripheral" button in the navigation region as a starting point. Similarly to the above-described destination search screen (D202), if any button is depressed, a corresponding screen is displayed. That is, if the "peripheral" button is depressed, the image processing functional section 57 displays a button for allowing the user to select a category of a facility as a search target, and if the category as the search target is designated, facilities corresponding to the designated category, such as a gas station or a convenience store, in the periphery of the host vehicle, are found and displayed in order from the facility closest to the host vehicle.

The intersection enlargement screen (D204) is displayed when a destination is set on the above-described destination setting screen (D202) or the peripheral facility search screen (D203) or when a "home" button displayed on the multi screen (D102) or the entire navigation screen (D103) is depressed to set a destination and route guidance by the route guidance functional section 53 starts. The route guidance functional section 53 guides a route on the basis of the host vehicle position measured by the positioning functional section 52 and map data which is read from the memory by the data processing functional section 54. The route guidance functional section 53 displays the intersection enlargement screen (D204) after the vehicle draws near an intersection where the vehicle turns right or left and also passes sound data for route guidance to the sound processing functional section 56. Fig. 21 is a diagram of the intersection enlargement screen (D204). As shown in Fig. 21, the enlarged view of an intersection is displayed in the navigation region, and a route in which the vehicle will be traveling is indicated by an arrow. At this time, audio/visual operation buttons are displayed in the AV region.

In Steps S 104 to S107, an operation of a display element displayed in a pop-up image is detected, and the displayed content of the pop-up image is updated. If the user operation detection functional section 51 a detects a touch operation of a display element in a pop-up image, such as a button for destination search displayed on the destination setting screen (D202) (Step S104), the type of the user's operation is determined (Step S105). When the detected user's operation is an operation to close a pop-up image, such as a touch operation of a "return" button displayed in the pop-up image, the pop-up image is closed and the basic screen (in this case, the multi screen (D102) or the entire navigation screen (D103)) is again displayed in front. That is, if the user operation detection functional section 51 a detects the touch operation of the "return" button, the superimposed display image generation functional section 51b ends generation of a pop-up image, and the image processing functional section 57 ends superimposed display of a pop-up image on the basic screen. Thereafter, the processing of this flowchart ends.

When the detected user's operation is not an operation to close a pop-up image, the superimposed display image generation functional section 51b generates a pop-up image updated in accordance with the operation to update the displayed content in the pop-up image (Step S106). Updated data of the pop-up image is recorded in advance in the ROM in association with identification information of buttons (display elements) displayed in the pop-up image, and is specified by using identification information of a display element operated by the user. The image processing functional section 57 generates an image signal for superimposingly displaying the generated pop-up image on the basic screen and outputs the image signal to the touch panel 21 (Step S107). Thus, display of a pop-up image superimposingly displayed in front of the basic screen is updated.

If the user operation detection functional section 51a detects that any button for destination setting is depressed, the image processing functional section 57 displays a corresponding screen. For example, the image processing functional section 57 displays a screen for character input if the "search by Japanese syllabary" button is depressed, displays a screen for selecting a prefecture or the like if the "search by address" button is depressed, displays a screen for requesting the user to bring a mobile phone close to the infrared ray receiving/emitting section 25 if the "search by mobile connection" button is depressed, displays destinations which have previously been searched for if the "search by history" button is depressed, displays a screen including a list of favorite destinations registered by a user's operation if the "search by favorite" button is depressed, displays a screen for telephone number input if the "search by telephone number" button is depressed, displays a screen for selecting a genre if the "search by facility/genre" button is depressed, displays a screen including a map last displayed if the "search by previous map" button is depressed, displays a screen for map code input if the "search by map code" button is depressed, and displays a screen for selecting a destination from additional data if the "search by additional data" button is depressed. Communication data which is provided from the mobile phone by the infrared ray receiving/emitting section 25 includes positional information, such as the latitude or longitude of a destination, an address, or a telephone number. If a destination is set on a screen which is displayed when the "search by Japanese syllabary", "search by address", "search by mobile connection", "search by favorite", "search by telephone number", "search by facility/genre", "search by previous map", "search by map code", "search by additional data", or "search by history" button is depressed, the route guidance functional section 53 finds out the shortest route from the host vehicle position measured by the positioning functional section 52 and the destination and starts route guidance.

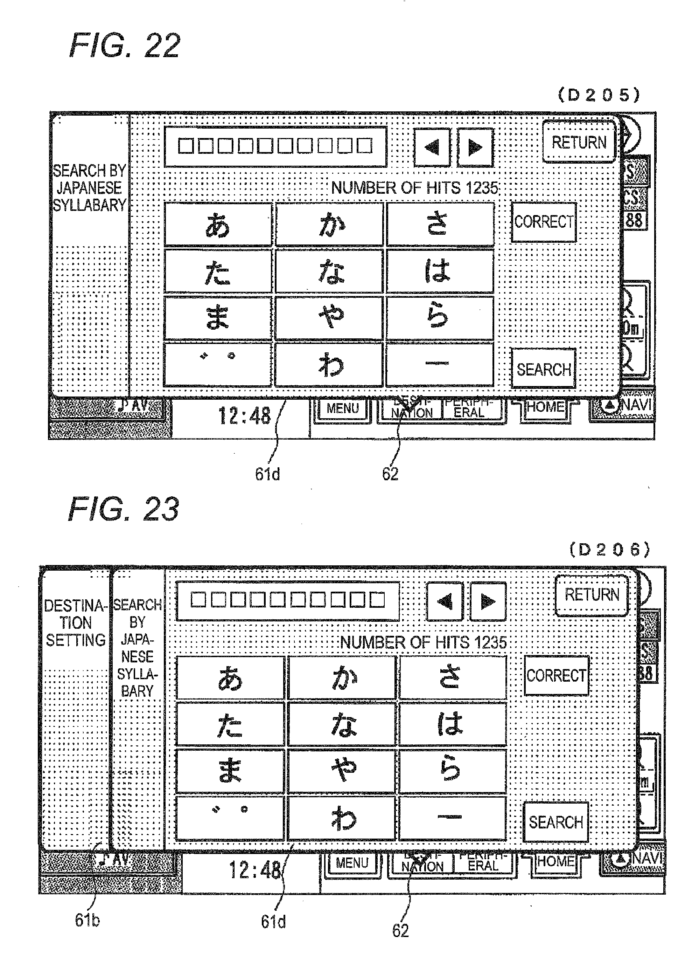

Fig. 22 is a diagram showing a display image of a Japanese syllabary search screen (D205) in this embodiment which is displayed when an operation of the "search by Japanese syllabary" button displayed on the destination setting screen (D202) is received. On the Japanese syllabary search screen (D205), buttons for inputting a character string for search are arranged. In this embodiment, a character string input interface is used such that a button with the first character of each Japanese consonant column described is operated once or multiple times to select a character in the consonant column assigned to the button. For example, in inputting a Japanese character "ku", the user operates a "ka" button three times to select "ku". A voiced consonant mark/semi-voiced consonant mark button and a dash mark button are also displayed. An input character string is displayed in an input character string display region at the upper part of the pop-up image 61 d, and the user inputs a desired character string by using the interface and touches a "search" button to search a destination.

Similarly to the destination setting screen (D202), the pop-up image 61d on the Japanese syllabary search screen (D205) includes the balloon-like relation display image 62 which represents the relation between the "destination" button and the pop-up image 61d. The relation display image 62 continuously indicates the relation with the "destination" button after searching is subsequently carried out and the search result is displayed in the updated pop-up image (not shown). As described above, the relation with a button for calling a pop-up image is continuously displayed even when the displayed content of a pop-up image is updated, making it possible for the user to easily understand that a currently displayed screen is a screen which is displayed in accordance with which operation is initially carried out. For example, according to the above-described example, even when the destination setting screen (D202) progresses to the Japanese syllabary search screen (D205) and then progresses to a search result screen (not shown), the display of the balloon-like relation display image 62 is maintained, making it possible for the user to intuitively understand that a current operation is an operation which is started by an operation of the "destination" button. This allows the user to feel comfortable with the interface of the navigation device 1.

Next, the display mode of the AV screen of the navigation device 1 will be described. As shown in Fig. 8, the AV screen of the navigation device 1 has six screens of a radio mode, a CD mode, a One Seg mode, an iPod mode, an external input mode, and an off mode. If any source selection button or an "OFF" button on the left side of the AV region is depressed, the image processing functional section 57 displays an AV operation screen of a corresponding mode. For example, if a "radix" button is depressed, the image processing functional section 57 displays a radio frequency or selection button shown in Fig. 9. The same is applied to a CD or iPod button. If a "One Seg" button or an "external input" button is depressed, the image processing functional section 57 displays a selection button or the like in the AV region and also switches display of the navigation region to an image from the broadcast wave receiving section 7 or an image of the external sound/image input section 8. Meanwhile, if the brake detection section 4 detects release of a parking brake signal, the image processing functional section 57 stops image display from the broadcast wave receiving section 7 or the external sound/image input section 8.

According to the navigation device 1 of this embodiment, the relation display image 62 which allows the user to visually understand the relation between an operated button or the like and a pop-up image and is continuously displayed even when the displayed content of a pop-up image is updated is included in each of the pop-up images 61a to 61d which are displayed when a touch operation of a display element, such as a button displayed on the basic screen, is detected. Thus, it is possible for the user to easily understand the relation between a current operation and a starting point, and continuity from the starting point to the operation. A function which is called by the basic screen is provided by using a pop-up image, and the basic screen is continuously displayed on the background, making it also possible for the user to easily understand the relation between a current operation and a starting point. Although in this embodiment, a pop-up image has been described which is displayed when an operation of a button or the like arranged in the navigation region is received, the invention may be applied to a pop-up image which is displayed when an operation of a button or the like arranged in the AV region of the multi screen (D102) or the entire AV screen (D104) is received.

Although in this embodiment, when a user's operation of a display element displayed in a pop-up image is carried out, the content of an initially displayed pop-up image is updated, instead of updating the displayed content, a new pop-up image may be further displayed in front of the displayed pop-up image. Fig. 23 is a diagram showing a Japanese syllabary search screen (D206) which, when a touch operation of the "search by Japanese syllabary" button is carried out on the destination setting screen (D202) of Fig. 18, is displayed by superimposing a pop-up image 61d for search by Japanese syllabary in front of the pop-up image 61b without updating the displayed content of the pop-up image 61b displayed on the destination setting screen (D202) in another embodiment. That is, if the user operation detection functional section 51a detects the touch operation of the "search by Japanese syllabary" button, the superimposed display image generation section 51b generates the pop-up image 61 d for search by Japanese syllabary as a new pop-up image. The image processing functional section 57 superimposingly displays the generated pop-up image 61d in front of the pop-up image 61b.

In this way, it becomes possible for the user to understand the operation progress to a currently displayed screen while easily understanding the relation between a current operation and a starting point, and continuity from the starting point to the operation. According to this display method, it is possible to return from the Japanese syllabary search screen (D206) to the destination setting screen (D202) without using the "return" button. That is, if a touch operation of a tab portion (in Fig. 23, a portion where the character string "destination setting" on the left side of the pop-up image is displayed) of the pop-up image 61b is detected, the user operation detection functional section 51a notifies the detection result to the image processing functional section 57. The image processing functional section 57 displays the pop-up image 61b at the top to switch the screen to the destination setting screen (D202).
Although in this embodiment, the invention is applied to an in-vehicle navigation device, the invention is not limited thereto. For example, the invention may be applied to a portable navigation device or a portable electronic apparatus having a navigation function, such as a mobile phone.
Although in this embodiment, the invention is applied to a navigation device serving as an information processing device capable of processing navigation information, the invention is not limited thereto. For example, the invention may be applied to a navigation device having a touch panel or an image processing device which is externally connected to or embedded in a portable electronic apparatus and generates a navigation image.

This application is based on Japanese Patent Application No. 2008-234446 filed on September 12, 2008, the content of which is incorporated herein by reference.

### Reference Signs List

- 1:: navigation device
- 51:: operation processing functional section
- 51 a:: user operation detection functional section
- 51b:: superimposed display image generation functional section
- 57:: image processing functional section
- 61a to 61d:: pop-up image
- 62:: relation display image

## Claims

1. An information processing device capable of processing navigation information, the device comprising:
image processing means for generating a signal for displaying a basic screen including a predetermined display element, to which a predetermined function is assigned, on a display device and outputting the signal to the display device;
detection means for detecting a user's operation of the predetermined display element displayed on the display device; and
image generation means for generating a superimposed display image for providing the predetermined function assigned to the predetermined display element when the operation is detected by the detection means,
wherein, when the superimposed display image is generated by the image generation means, the image processing means generates a signal for displaying a superimposed screen, in which the superimposed display image is superimposed on the basic screen, on the display device and outputs the signal to the display device,
wherein the superimposed display image generated by the image generation means includes a relation display image which allows the user to visually understand a relation between the predetermined display element and the superimposed display image, and
the relation display image is generated so as to be continuously displayed on the display device even when a displayed content of the superimposed display image is updated.

2. The information processing device according to claim 1,
wherein, in displaying the superimposed display image generated by the image generation means, the image processing means generates a signal for displaying an animation, in which the superimposed display image appears with a position where the predetermined display element is displayed as a starting point, on the display device and outputs the signal to the display device.

3. The information processing device according to claim 1,
wherein the superimposed display image is an image in which scroll display of information is possible in the superimposed display image.

4. The information processing device according to any one of claims 1 to 3,
wherein the display device is a touch panel display, and
the detection means detects a user's touch operation on the touch panel display.

5. An information processing method capable of processing navigation information, the information processing method comprising:
a first image processing step of generating a signal for displaying a basic screen including a predetermined display element, to which a predetermined function is assigned, on a display device and outputting the signal to the display device;
a detection step of detecting a user's operation of the predetermined display element displayed on the display device;
an image generation step of generating a superimposed display image for providing the predetermined function assigned to the predetermined display element when the operation is detected in the detection step;
a second image processing step of, when the superimposed display image is generated in the image generation step, generating a signal for displaying a superimposed screen, in which the superimposed display image is superimposed on the basic screen, on the display device and outputting the signal to the display device,
wherein the superimposed display image generated in the image generation step includes a relation display image which allows the user to visually understand a relation between the predetermined display element and the superimposed display image, and
wherein the relation display image is generated so as to be continuously displayed on the display device even when a displayed content of the superimposed display image is updated.

## Amended claims

### Amended claims under Art. 19.1 PCT

**1.** (Amended) An information processing device capable of processing navigation information, the information processing device comprising:
function image processing means for outputting, to a display device, a function image which includes a function operation image for outputting a detailed function included in a predetermined function;
basic image processing means for outputting, to the display device, a basic image which includes an operation image for outputting the function image; and
control means for performing control for superposing the function image on the basic image and displaying the function image and the basic image together with a relation display image indicating a relation between the basic image and the function image when the operation image is operated, and for performing control for further superposing and displaying information indicating a function according to an operation of the function operation image with remaining a tub portion in a function image which has been output to the display device before the function operation image is operated.

**2.** (Amended) The information processing device according to claim 1, wherein the control means performs control for detecting an operation of the tub portion and if information indicating a function which has been output to a display device before the function operation image is operated is selected, outputting a function which the information indicates to a display device.

**3.** (Amended) The information processing device according to claim 1 or 2, wherein the control means, when a function image is output by the function image processing means, performs control for displaying an animation in which the function image appears with a position where an operation image related to the function image is displayed as a starting point.

**4.** (Amended) The information processing device according to any one of claims 1 to 3, wherein the display device is a touch panel display, and
wherein the control means detects an operation with respect to the operation screen and an operation with respect to the function operation screen by a touch operation performed with respect to the touch panel display.

**5.**
(Amended) An information processing method capable of processing navigation information, the information processing method comprising:
a function image processing step of outputting, to a display device, a function image which includes a function operation image for outputting a detailed function included in a predetermined function;
a basic image processing step of outputting, to the display device, a basic image which includes an operation image for outputting the function image;
a first display step of superposing the function image on the basic image and displaying the function image and the basic image together with a relation display image indicating a relation between the basic image and the function image when the operation image is operated; and
a second step of further superposing and displaying information indicating a function according to an operation of the function operation image with remaining a tub portion in a function image which has been output to the display device before the function operation image is operated.
